# EUROPEAN PATENT SPECIFICATION

(11) **EP 1 777 137 B1**
(45) Date of publication and mention of the grant of the patent: **25.07.2012**
(21) Application number: 06021848.4
(22) Date of filing: 18.10.2006
(51) Int. Cl.: B62B 3/18, B60B 33/02

(54) **Improved base frame for a nestable roll container**
Verbesserter Bodenrahmen für einen stapelbaren Rollbehälter
Châssis de base amélioré pour un container roulant emboîtable

(30) Priority: 18.10.2005 NL 1030215
(43) Date of publication of application: 25.04.2007
(73) Proprietor: Scholte's Metaalbewerking B.V., 7876 TP Valthermond (NL)
(72) Inventor: Wiekens, Jan, 9645 LA Veendam (NL)
(74) Representative: Mink-Lindenburg, Charlotte Hildegard

(56) References cited:
- EP-A- 1 048 546
- GB-A- 1 569 641
- GB-A- 2 353 700
- US-A- 3 861 702

## Description

The present invention relates to a base frame for a roll container, which base frame is generally U-shaped and is provided with two legs which are connected pivotally to a transverse connection; a plurality of wheels mounted on the underside of the base frame; means for fastening one or more panels, which means are situated on the upper side of the base frame; and a base panel which is mounted in upward foldable manner on the base frame such that the legs are urged into a transport position when the base panel is folded down and the legs can take up a nesting position when the base panel is folded up.

A roll container with a base frame of the type described in the preamble is known from the Netherlands patent NL 1025734 from the same applicant. The known roll container is intended for the transport of goods such as flowers and plants, often over great distances. After unloading of the goods the known roll container can be set easily and quickly in the nesting position by folding up the base panel. A set of nested, empty roll containers takes up minimal space and can therefore be transported at minimal cost. In contrast to other known roll containers, it is no longer necessary for transport purposes to disassemble the known roll container and reassemble it again prior to loading. This results in time gained and saves costs. These operations are moreover often perceived as burdensome and unpleasant.

GB1569641 discloses a roll container provided with a base frame having the features described in the preamble of claim 1. In the known roll container side panels are fixedly attached to the base frame. The mechanism for setting the roll container in the transport position or the nesting position is provided partly on the base panel as well as partly on the side panels. As a consequence the side panels can not be made detachable without changing the entire mechanism

The invention has for its object to provide an improved base frame for a roll container of the type stated in the preamble.

The base frame according to the invention has for this purpose the feature that the wheels comprise at least two swivel wheels; that the base panel and the base frame are provided with co-acting locking means for locking the swivel wheels, these locking means being adapted to lock the swivel wheels when the base panel is folded down and to unlock the swivel wheels when the base panel is folded up; and that the base panel engages by means of a toothing on the base frame, this toothing being adapted to urge the legs to the transport position when the base panel is folded down and to urge the legs to the nesting position when the base panel is folded up.

According to the invention the swivel wheels are locked in favourable manner against swivelling in the transport position of the base frame. Conversely, the swivel wheels are advantageously unlocked in the nesting position of the base frame. The improved base frame is hereby always optimally ready for the intended use. The toothing provides a mechanically robust and reliable construction with which the legs are placed automatically in the correct position. The base frame according to the invention is fully ready for use in one operation.

It is noted that US3861702 discloses a transport cart provided with swivel wheels as well as locking means for the swivel wheels as described in the characterizing part of claim 1. The known transport cart includes a lower frame member having a U shaped configuration with fixed legs.

In a first preferred embodiment, the base panel is provided on the underside thereof with the toothing and wherein the legs of the base frame are provided with support plates having slotted holes for engagement of the toothing.

In a preferred embodiment, the locking means are adapted, when the base panel is folded down, to automatically lock the swivel wheels in transporting direction by displacing the base frame. By being taken into use the improved base frame is automatically in optimal readiness for the intended use.

According to a first variant, the base panel is provided on the underside thereof with one or more pins, and each swivel wheel is provided with a cap with an opening for receiving one of the pins. According to a second variant, each swivel wheel is provided with a yoke plate with an opening for receiving one of the pins. In a self-locating embodiment the cap or yoke plate is provided with a chamfered portion close to the opening. The pins are preferably spring-mounted.

According to another preferred embodiment, the base panel is provided with further locking means for locking to the base frame in the transport position.

The invention also relates to a roll container provided with a base frame according to the invention.

The invention will now be discussed in more detail with reference to the drawings, in which
Figure 1 shows a schematic view of a first embodiment of a roll container according to the invention;
Figure 2 shows a schematic view of the base frame of the roll container of figure 1 in transport position;
Figure 3 shows a schematic view of the base frame of the roll container of figure 1 in nesting position; and
Figure 4 shows part of the base frame of the roll container of figure 3 in more detail.

The same components are designated in the figures with the same reference numerals.

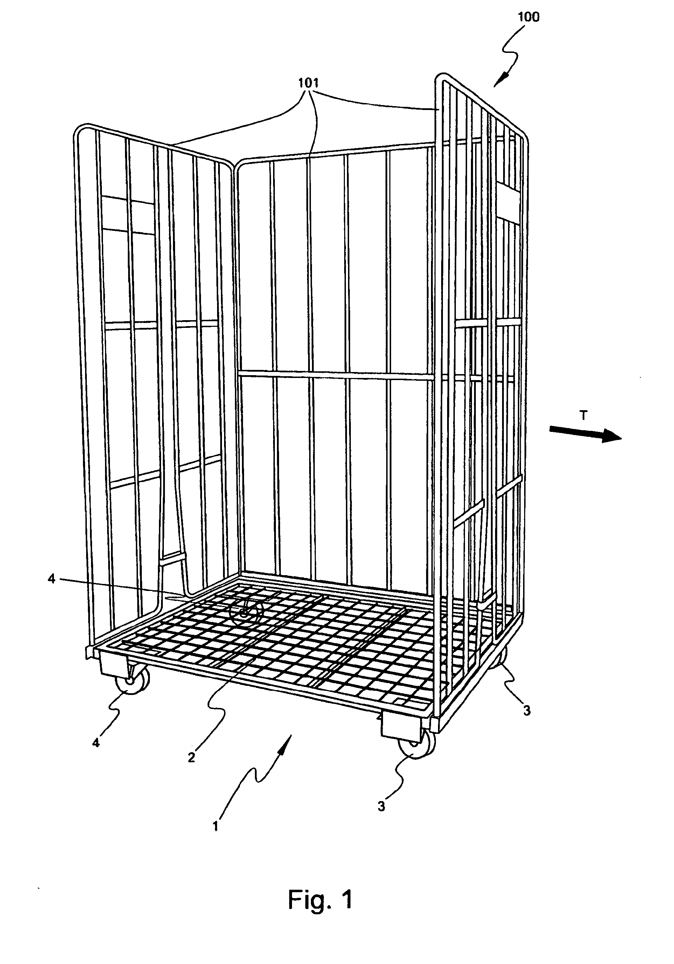

Figure 1 shows a schematic view of a first embodiment of a roll container 100 according to the invention. Roll container or rolling container 100 is provided with a base frame 1 according to the invention. Panels 101 are placed on base frame 1. In the shown preferred embodiment panels 101 are substantially provided with rod mesh. Standard rod mesh sides are available on the market which can be mounted on base frame 1 in a manner known in the field. If desired, roll container 100 can further be provided with shelves (not shown).

Base frame 1 is provided on the top side with a base panel 2. In the shown preferred embodiment base panel 2 is likewise substantially provided with rod mesh. If desired, base panel 2 and/or panels 101 can take another form, for instance a closed form. Base panel 2 is provided on the underside with wheels 3, 4.

Roll container 100 is shown in the transport mode or transport position, i.e. ready for displacement in transporting direction T.

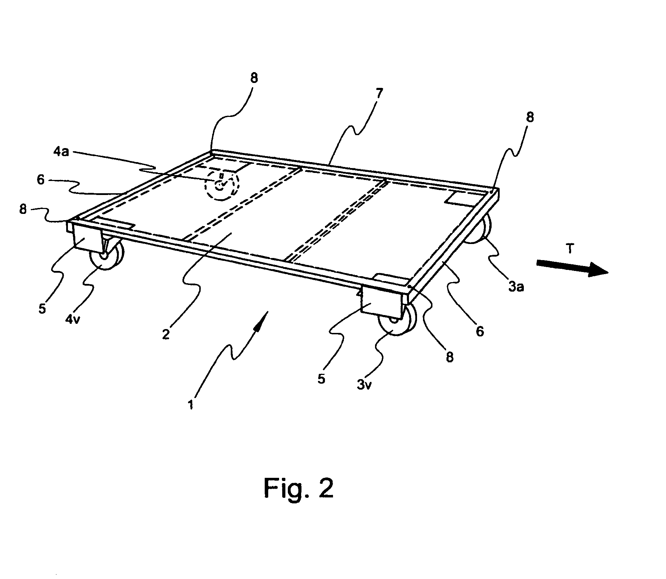

Figure 2 shows base frame 1 in the transport position with folded-down base panel 2. Base frame 1 is generally U-shaped and has two legs 6 connected pivotally to a transverse connection 7. Legs 6 and transverse connection 7 are provided on the upper side with fastening means 8 for panels 101. Fastening means 8 are shown by way of illustration in the form of openings 8.

In the shown position of base frame 1 with folded-down base panel 2 the legs 6 are urged into the transport position.

Base frame 1 is provided with four wheels 3a, 3v, 4a, 4v. At least two of the wheels are swivel wheels, in this embodiment 3a, 3v.

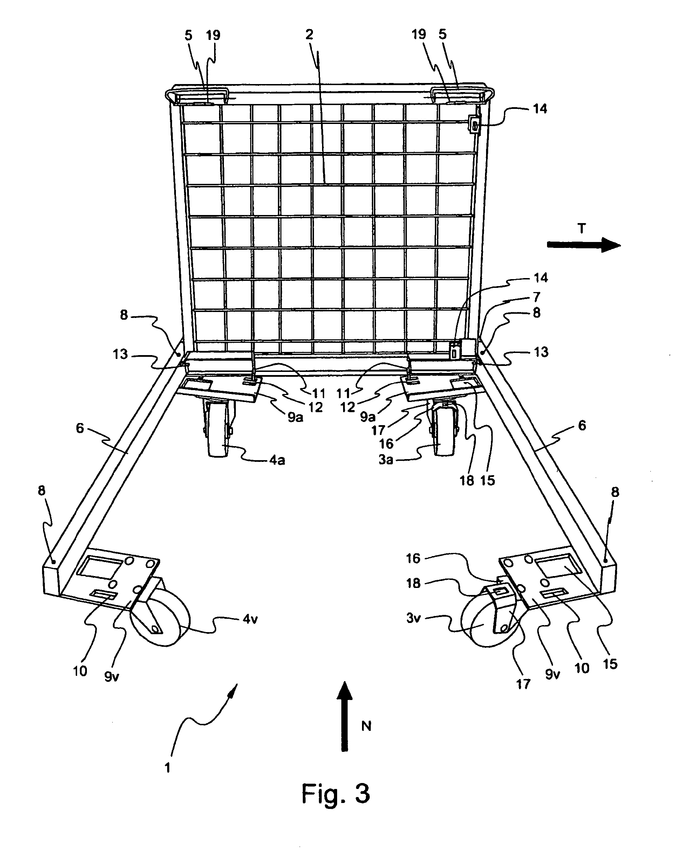

Figure 3 shows base frame 1 in the nesting mode or nesting position with folded-up base panel 2. Legs 6 are now urged into the nesting position. In the nesting position legs 6 move apart sufficiently to allow nesting of a plurality of roll containers 100 with base frames 1.

Base frame 1 and base panel 2 are provided with co-acting locking means 14, 15, 16, 18 for locking swivel wheels 3a, 3v. The locking means are adapted such that swivel wheels 3a, 3v are locked against swiveling when base panel 2 is folded down, and the swivel wheels are unlocked when base panel 2 is folded up.

The locking means comprise a pin-hole connection consisting of a pin 14 arranged on base panel 2 and an opening 18 in a cap 16 mounted on yoke plate 17 of swivel wheel 3a, 3v. Alternatively, cap 16 can be integrated into yoke plate 17. The locking means are preferably given a self-locating form. This can be achieved by arranging opening 18 recessed into cap 16. Wheels 3a, 3v, 4a, 4v are mounted on support plates 9a, 9v arranged under legs 6. An opening 15 for passage of pin 14 is provided in each support plate. Pins 14 are preferably spring-mounted. Through folding down of the base panel pin 14 protrudes through opening 50. When base frame 1 is moved the swivel wheels 3a, 3v will automatically take up the intended transport position, whereby pin 14 can be received in opening 18. Swivel wheels 3a, 3v are now locked in the transport position and function as rigid casters.

Base panel 2 is mounted rotatably on legs 6, for instance by means of pins 13. Base panel 2 is further provided with a toothing 11 which engages in slotted holes 12 on support plates 9a. In co-action with slotted holes 12 the toothing 11 provides for an active movement of legs 6 between the nesting position and the transport position.

Base panel 2 is further provided on the underside with protrusions 19 which are intended to be received in slotted holes 10 arranged in support plates 9v for the purpose of locking base frame 1 in the transport position.

Further locking means 5 are provided on base panel 2 for the purpose of locking base panel 2 to base frame 1 in the transport position. In the shown preferred embodiment the locking means are embodied as handles 5 which engage on support plates 9v.

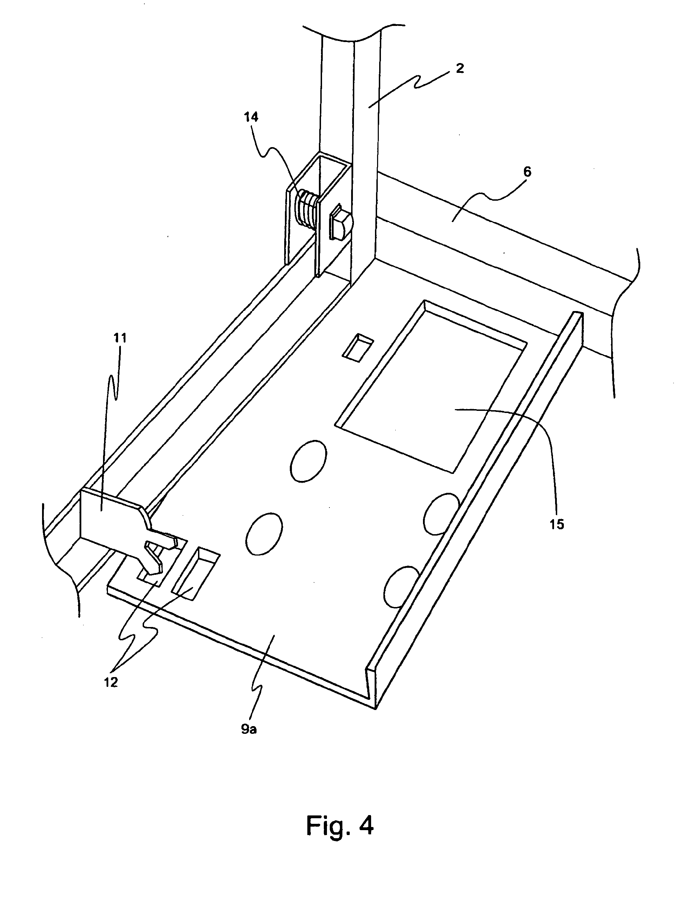

Figure 4 shows a part of base frame 1 in more detail. Clearly shown is how toothing 11 engages in slotted holes 12 in order to actively move legs 6 to the desired position. Pin 14, which is intended to lock swivel wheel 3a (not shown here) so it functions as rigid caster, is shown in the preferred embodiment as spring-mounted pin.

The invention is of course not limited to the shown and described preferred embodiment, but extends generally to any embodiment falling within the scope of the appended claims as seen in the light of the foregoing description and drawings.

## Claims

1. Base frame for a roll container, which base frame is generally U-shaped and provided with:
- two legs which are connected pivotally to a transverse connection;
- a plurality of wheels mounted on the underside of the base frame;
- means for fastening one or more panels, which means are situated on the upper side of the base frame; and
- a base panel which is mounted in upward foldable manner on the base frame such that the legs are urged into a transport position when the base panel is folded down and the legs can take up a nesting position when the base panel is folded up,
**characterized in that**
- the wheels comprise at least two swivel wheels (3a, 3v);
- the base panel (2) and the base frame (1) are provided with co-acting locking means (14, 16, 18) for locking the swivel wheels, these locking means being adapted to lock the swivel wheels when the base panel is folded down and to unlock the swivel wheels when the base panel is folded up; and
- the base panel (2) engages by means of a toothing (11) on the base frame (1), this toothing (11) being adapted to urge the legs (6) to the transport position when the base panel (2) is folded down and to urge the legs to the nesting position when the base panel is folded up.

2. Base frame as claimed in claim 1, wherein the base panel (2) is provided on the underside thereof with the toothing (11) and wherein the legs (6) of the base frame (1) are provided with support plates (9a) having slotted holes (12) for engagement of the toothing.

3. Base frame as claimed in claim 1 or 2, wherein the locking means (14, 16, 18) are adapted, when the base panel (2) is folded down, to automatically lock the swivel wheels (3a, 3v) in transporting direction (T) by displacing the base frame (1).

4. Base frame as claimed in claim 1, 2 or 3, wherein the base panel (2) is provided on the underside thereof with one or more pins (14), and wherein each swivel wheel (3a, 3v) is provided with a cap (16) with an opening (18) for receiving one of the pins.

5. Base frame as claimed in claim 1, 2 or 3, wherein the base panel (2) is provided on the underside thereof with one or more pins (14), and wherein each swivel wheel (3a, 3v) is provided with a yoke plate with an opening (18) for receiving one of the pins.

6. Base frame as claimed in claim 4 or 5, wherein the cap (16) or the yoke plate is provided with a chamfered portion close to the opening (18).

7. Base frame as claimed in claim 4 or 5, wherein the pins (14) are spring-mounted.

8. Base frame as claimed in any of the foregoing claims, wherein the base panel (2) is provided with further locking means (5) for locking to the base frame (1) in the transport position.

9. Roll container (100) provided with a base frame (1) as claimed in any of the foregoing claims.

## Patentansprüche

1. Grundrahmen für einen Rollcontainer, wobei der Grundrahmen im Wesentlichen U-förmig ausgebildet ist und das versehen ist mit:
- zwei Beinen, die schwenkbar mit einer Querverbindung verbunden sind;
- einer Vielzahl von Rädern, die an der Unterseite des Grundrahmens befestigt sind;
- Mitteln zum Befestigen eines oder mehrerer Wandelemente, wobei diese Mittel an der Oberseite des Grundrahmens angeordnet sind; und
- einem Grundelement, das auf dem Grundrahmen in nach oben faltbarer Weise befestigt ist, so daß die Beine in eine Transportposition gebracht werden, wenn das Grundelement niedergefaltet ist und wobei die Beine eine Ruhestellung einnehmen können, wenn das Grundelement hochgefaltet ist,
**dadurch gekennzeichnet, dass**
- die Räder mindestens zwei schwenkbare Räder (3a, 3v) umfassen,
- das Grundelement (2) und der Grundrahmen (1) mit zusammenwirkenden Schließmitteln (14, 16, 18) versehen sind, um die schwenkbaren Räder zu verschließen, wobei diese Schließmittel ausgebildet sind, um die schwenkbaren Räder zu blockieren, wenn das Grundelement niedergefaltet ist und sie freizugeben, wenn das Grundelement hochgefaltet ist; und
- das Grundelement (2) mittels einer Verzahnung (11) in den Grundrahmen (1) eingreift, wobei diese Verzahnung (11) ausgebildet ist, um die Beine (6) in die Transportstellung zu bringen, wenn das Grundelement (2) niedergefaltet ist und sie in die Ruhestellung zu bringen, wenn das Grundelement hochgefaltet ist.

2. Grundrahmen gemäß Anspruch 1, **dadurch gekennzeichnet, dass** das Grundelement (2) an seiner Unterseite mit der Verzahnung (11) versehen ist und wobei die Beine (6) des Grundrahmens (1) mit Stützplatten (9a) versehen sind, die geschlitzte Löcher (12) zum Eingriff in die Verzahnung (11) aufweisen.

3. Grundrahmen gemäß Anspruch 1 oder Anspruch 2, **dadurch gekennzeichnet, dass** die Schließmittel (14, 16, 18) ausgebildet sind, um automatisch die schwenkbaren Räder (3a, 3v) durch Verlagern des Grundrahmens (1) in der Transportrichtung (T) zu arretieren, wenn das Grundelement (2) niedergefaltet ist.

4. Grundrahmen gemäß Anspruch 1, 2 oder 3, **dadurch gekennzeichnet, dass** das Grundelement (2) an seiner Unterseite mit einem oder mehreren Anschlußstiften (14) versehen ist und wobei jedes der schwenkbaren Räder (3a, 3v) mit einer Kappe (16) versehen sind, die eine Öffnung (18) aufweist, um einen der Anschlußstifte aufzunehmen.

5. Grundrahmen gemäß Anspruch 1, 2 oder 3, **dadurch gekennzeichnet, dass** das Grundelement (2) an dessen Unterseite mit einer oder mehreren Anschlußstiften (14) versehen ist, und wobei jedes der schwenkbaren Räder (3a, 3v) mit einer Jochplatte mit einer Öffnung (18) zur Aufnahme einer der Anschlußstifte versehen ist.

6. Grundrahmen gemäß Anspruch 4 oder Anspruch 5, **dadurch gekennzeichnet, dass** die Kappe (16) oder die Jochplatte in der Nähe der Öffnung (18) mit einem abgeschrägten Bereich versehen ist.

7. Grundrahmen gemäß Anspruch 4 oder Anspruch 5, **dadurch gekennzeichnet, dass** die Pins (14) auf Federn montiert sind.

8. Grundrahmen gemäß einem der vorhergehenden Ansprüche, **dadurch gekennzeichnet, dass** das Grundelement (2) mit weiteren Schließmitteln (5) versehen ist, um es in der Transportstellung an dem Grundrahmen (1) zu arretieren.

9. Rollcontainer (100), der mit einem Grundrahmen (1) gemäß einem der vorhergehenden Ansprüche versehen ist.

## Revendications

1. Châssis de base pour un conteneur roulant, lequel châssis de base a une forme générale en U et est muni de :
- deux branches reliées de façon pivotante à un connecteur transversal ;
- une pluralité de roues montées sur la face inférieure du châssis de base ;
- des moyens pour fixer un ou plusieurs panneaux, lesquels moyens étant situés sur la face supérieure du châssis de base ; et
- un panneau de base monté sur le châssis de base de façon à pouvoir être relevé de telle sorte que les branches sont contraintes dans une position de transport lorsque le panneau de base est rabattu vers le bas et que les branches peuvent prendre une position d'emboîtement lorsque le panneau de base est relevé,
**caractérisé en ce que**
- les roues comprennent au moins deux roues pivotantes (3a, 3v) ;
- le panneau de base (2) et le châssis de base (1) sont munis de moyens de blocage coopérants (14, 16, 18) pour bloquer les roues pivotantes, ces moyens de blocage étant aptes à bloquer les roues pivotantes lorsque le panneau de base est rabattu vers le bas et à débloquer les roues pivotantes lorsque le panneau de base est relevé ; et
- le panneau de base (2) s'engrène au moyen d'une denture (11) sur le châssis de base (1), ladite denture (11) étant apte à contraindre les branches (6) dans la position de transport lorsque le panneau de base (2) est rabattu vers le bas et à contraindre les branches dans la position d'emboîtement lorsque le panneau de base est relevé.

2. Châssis de base selon la revendication 1, dans lequel le panneau de base (2) est muni sur sa face inférieure de la denture (11) et dans lequel les branches (6) du châssis de base (1) sont munies de plaques support (9a) présentant des ouvertures en fente (12) pour l'engrenage de la denture.

3. Châssis de base selon la revendication 1 ou 2, dans lequel les moyens de blocage (14, 16, 18) sont aptes, lorsque le panneau de base (2) est rabattu vers le bas, de bloquer automatiquement les roues pivotantes (3a, 3v) dans la position de transport (T) en déplaçant le châssis de base (1).

4. Châssis de base selon la revendication 1, 2 ou 3, dans lequel le panneau de base (2) est muni sur sa face inférieure d'une ou plusieurs broches (14), et dans lequel chaque roue pivotante (3a, 3v) est munie d'une coiffe (16) présentant une ouverture (18) destinée à recevoir l'une des broches.

5. Châssis de base selon la revendication 1, 2 ou 3, dans lequel le panneau de base (2) est muni sur sa face inférieure d'une ou plusieurs broches (14), et dans lequel chaque roue pivotante (3a, 3v) est munie d'une plaque étrier présentant une ouverture (18) destinée à recevoir l'une des broches.

6. Châssis de base selon l'une des revendications 4 ou 5, dans lequel la coiffe (16) ou la plaque étrier est munie d'une section chanfreinée à proximité de l'ouverture (18).

7. Châssis de base selon l'une des revendications 4 ou 5, dans lequel les broches (14) sont montées sur ressort.

8. Châssis de base selon l'une des revendications précédentes, dans lequel le panneau de base (2) est muni de moyens de blocage supplémentaires (5) pour bloquer le châssis de base (1) dans la position de transport.

9. Conteneur roulant (100) muni d'un châssis de base (1) selon l'une des revendications précédentes.
